# EUROPÄISCHE PATENTSCHRIFT

(11) **EP 1 917 458 B1**
(45) Veröffentlichungstag und Bekanntmachung des Hinweises auf die Patenterteilung: **18.08.2010**
(21) Anmeldenummer: 06777075.0
(22) Anmeldetag: 25.08.2006
(51) Int. Cl.: F16H 25/20

(54) **LINEARSTELLORGAN, INSBESONDERE ZUR FERNBETÄTIGUNG VON VERSTELLBAREN KOMPONENTEN AN WINDKANALMODELLEN**
LINEAR ACTUATING ORGAN, IN PARTICULAR FOR THE REMOTE ACTUATION OF DISPLACEABLE COMPONENTS IN WIND TUNNEL MODELS
ORGANE DE REGLAGE LINEAIRE NOTAMMENT DESTINE A LA TELECOMMANDE DE COMPOSANTS REGLABLES DE MODELES DE SOUFFLERIE

(30) Priorität: 26.08.2005 DE 102005040441
(43) Veröffentlichungstag der Anmeldung: 07.05.2008
(73) Patentinhaber: Airbus Operations GmbH, 21129 Hamburg (DE)
(72) Erfinder: AKKERMANN, Eldert, 28259 Bremen (DE)
(74) Vertreter: Kopf, Korbinian Paul
(86) Internationale Anmeldenummer: PCT/EP2006/008372
(87) Internationale Veröffentlichungsnummer: WO 2007/022998

(56) Entgegenhaltungen:
- DE-A1- 3 118 805
- DE-A1- 3 733 781
- DE-A1- 19 711 773
- DE-C1- 3 308 537

## Beschreibung

Die Erfindung betrifft ein Linearstellorgan, insbesondere zur Fernbetätigung von verstellbaren Komponenten an Windkanalmodellen, mit einem Gehäuse und einem Getriebemotor zum Antrieb einer Gewindespindel, wobei auf der Gewindespindel eine Gewindemutter zur Bewegung einer Schubstange angeordnet ist.

In Windkanalmodellen werden beispielsweise Linearaktuatoren zur Fernbetätigung von verstellbaren Komponenten, insbesondere von aerodynamischen Wirkflächen, Ventilen oder dergleichen, eingesetzt. Aufgrund der im Windkanal herrschenden hohen Strömungsgeschwindigkeit der Luft müssen von den Aktuatoren hohe Stellkräfte aufgebracht werden, wobei gleichzeitig eine sehr hohe Positionier- und Wiederholungsgenauigkeit der Aktuatoren erforderlich ist, um möglichst präzise Messergebnisse zu erhalten. Ferner müssen Linearaktuatoren aufgrund der räumlich begrenzten Größe der üblicherweise eingesetzten Windkanalmodelle über eine geringe Baugröße verfügen. Darüber hinaus müssen die eingesetzten Linearaktuatoren eine große Anzahl Betätigungen ermöglichen, ohne dass sich die Positionier- und Wiederholungsgenauigkeit verändert, da die Stellungen der aerodynamischen Wirkflächen der Windkanalmodelle während der Messungen ständig nachgeregelt werden müssen.

Die Schrift DE 31 18 805 A1, die alle Merkmale des Oberbegriffs des Anspruchs 1 zeigt, beschreibt eine herkömmliche Linearantriebseinheit mit einem Antriebsmotor, einem Getriebe und einem Mutter-Gewindespindel-Trieb.

Bekannte Ausführungsformen von Linearaktuatoren erfüllen die vorstehend genannten Anforderungen oftmals nicht oder nur unzureichend.

Aufgabe der Erfindung ist es daher ein Linearstellorgan, insbesondere zur Fernbetätigung von verstellbaren Komponenten an Windkanalmodellen zu schaffen, das hohe Stellkräfte bei einer zugleich hohen Positionier- und Wiederholungsgenauigkeit aufbringt und darüber hinaus eine geringe Baugröße aufweist.

Die erfindungsgemäße Aufgabe wird durch ein Linearstellorgan mit den Merkmalen des Patentanspruchs 1 gelöst.

Dadurch, dass die Gewindespindel mit dem Getriebemotor über einen Kettentrieb verbunden ist, wobei die Gewindespindel und eine Getriebemotorachse im Wesentlichen antiparallel angeordnet sind, ergibt sich eine sehr geringe Baugröße des erfindungsgemäßen Linearstellorgans, wobei gleichzeitig beträchtliche Stellkräfte bei einer hohen Positionier- und Wiederholungsgenauigkeit erreichbar sind. Darüber hinaus ermöglicht das Linearstellorgan eine große Anzahl von Betätigungen über den gesamten Verfahrweg hinweg ohne eine nennenswerte Beeinträchtigung der Genauigkeit. Darüber hinaus ermöglicht der Kettentrieb eine Entkopplung zwischen den auftretenden hohen Stellkräften und den vom Getriebemotor erbrachten Kräften.

Nach einer vorteilhaften Ausgestaltung ist der Getriebemotor zur Spannung einer Kette des Kettentriebs exzentrisch aufgenommen. Diese Ausgestaltung ermöglicht eine einfache Spannung der Kette des Kettentriebs, ohne dass zusätzliche Komponenten, wie beispielsweise ein Kettenspanner oder dergleichen erforderlich wären.

In Gemäßheit einer weiteren vorteilhaften Ausgestaltung ist vorgesehen, dass die Kette des Kettentriebs mittels mindestens eines Kettenspanners spannbar ist. Hierdurch ergibt sich die zusätzliche Möglichkeit, unabhängig von der exzentrischen Lagerung der Getriebemotorachse im Gehäuse des Linearstellorgans, eine Spannung der Kette des Kettentriebs vorzunehmen.

Eine vorteilhafte Weiterbildung sieht vor, dass zwei Endschalter zur Begrenzung eines Verfahrweges der Schubstange vorhanden sind, wobei die Endschalter mittels eines im Bereich der Schubstange angeordneten Schaltnockens betätigbar sind. Hierdurch wird eine Beschädigung des Linearstellorgans beim Überschreiten des vorgesehenen Verfahrweges der Schubstange vermieden.

In Gemäßheit einer weiteren vorteilhaften Ausgestaltung ist vorgesehen, dass jeder Endschalter auf jeweils einer Gewindestange durch Verdrehen der Gewindestange stufenlos verschiebbar angeordnet ist, um den Verfahrweg einzustellen.
Hierdurch ist eine konstruktiv besonders einfache und dennoch genaue Einstellung der Endpositionen der Schubstange möglich.

Nach Maßgabe einer weiteren vorteilhaften Ausgestaltung ist vorgesehen, dass das Gehäuse mindestens eine Längsführung aufweist, in der wenigstens eine an der Schubstange angeordnete Passfeder verschiebbar aufgenommen ist.
Hierdurch wird eine Verdrehung der Schubstange um ihre Längsachse vermieden. Daneben erfüllt die mindestens eine Längsführung in Verbindung mit der wenigstens einen Passfeder zumindest teilweise die Funktion einer Führung der Schubstange.

In einer vorteilhaften Weiterbildung der Erfindung ist vorgesehen, dass die Gewindespindel koaxial in der Schubstange aufgenommen ist.
Die koaxiale Ausbildung der Schubstange und der Gewindestange ermöglicht eine genaue Längsführung der Schubstange sowie eine effektive, zentrische Kraftübertragung zwischen der auf der Gewindespindel aufgenommenen Gewindemutter und der Schubstange. Darüber hinaus ermöglicht die koaxiale Anordnung eine kompakte Bauweise.

Weitere vorteilhafte Ausgestaltungen der Anordnung sind in den nachfolgenden Patentansprüchen niedergelegt.

In der Zeichnung zeigt:
- **Fig. 1**: eine perspektivische Gesamtansicht des erfindungsgemäßen Linear- stellorgans,
- **Fig. 2**: eine perspektivische Ansicht des Linearstellorgans ohne ein Gehäuse und
- **Fig. 3**: eine detaillierte Explosionsdarstellung des Linearstellorgans.

Gleiche konstruktive Elemente weisen in der Zeichnung jeweils dieselbe Bezugsziffer auf.

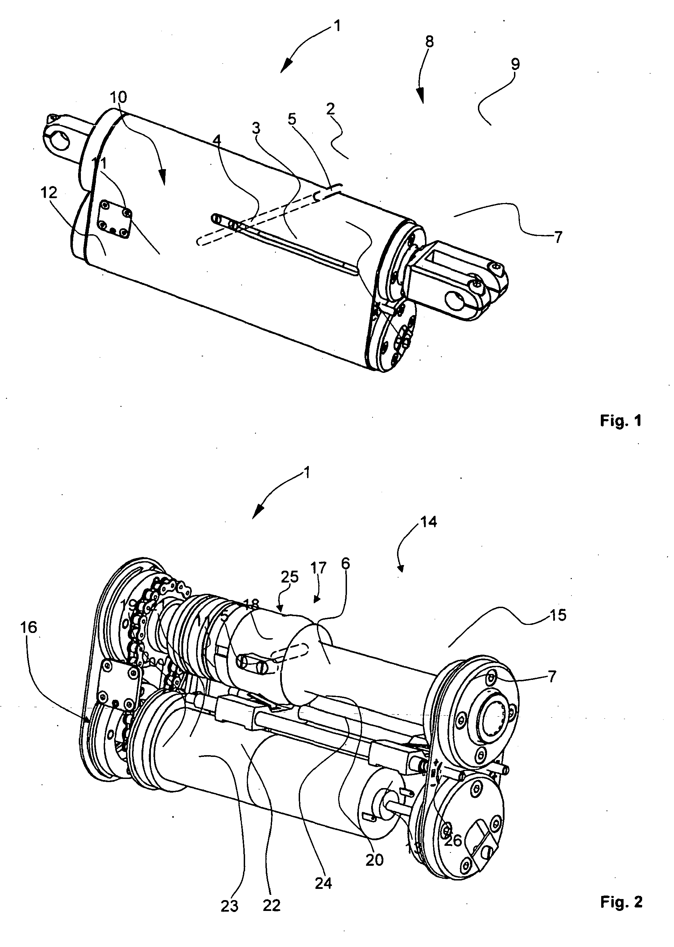

Die **Fig. 1** zeigt eine perspektivische Gesamtansicht eines erfindungsgemäßen Linearstellorgans 1.

Das Linearstellorgan 1 umfasst unter anderem ein Gehäuse 2 mit zwei Längsführungen 3,4, in denen jeweils eine Passfeder 5,6 in Längsrichtung verschiebbar aufgenommen ist. Die Länge der Längsführungen 3,4 entspricht hierbei in etwa einem mittels des Linearstellorgans 1 erreichbaren Verfahrweg. Im Gehäuse 2 ist weiterhin ein Kettenspanner 7 angeordnet. Ein weiterer, nicht mit einer Bezugsziffer versehener Kettenspanner ist im hinteren Bereich des Gehäuses 2 platziert. Im Bereich einer Hinterseite 8 des Gehäuses 2 ist eine Halterung 9 zur verschwenkbaren Befestigung des Linearstellorgans 1 an einem nicht gezeigten Widerlager vorhanden. Im Bereich einer Vorderseite 10 des Gehäuses 2 befindet sich eine innen hohl ausgebildete Schubstange 11 mit einem Gabelkopf 12.

Die **Fig. 2** zeigt eine perspektivische Darstellung des Linearstellorgans 1 ohne das Gehäuse 2.

Ein elektrischer Getriebemotor 13 treibt über einen Kettentrieb 14 eine in der Darstellung der Fig. 2 verdeckte Gewindespindel zur linearen Bewegung der Schubstange 11 an. Mittels des Kettenspanners 7 ist eine Kette 15 des Kettentriebs 14 spannbar. Der Gabelkopf 12 an einem Anfangsbereich 16 der Schubstange 11 ist der besseren zeichnerischen Übersichtlichkeit halber in der Fig. 2 nicht dargestellt. Ein Endbereich 17 der Schubstange 11 weist eine Aufweitung 18 in der Form eines Hohlzylinders auf. Die Aufweitung 18 dient insbesondere zur Aufnahme der in der Fig. 2 gleichfalls verdeckten Gewindemutter: An der Aufweitung 18 sind die Passfedern 5,6 befestigt, die im Zusammenwirken mit den Längsführungen 3,4 insbesondere ein Verdrehen der Schubstange 11 um ihre Längsachse bei einer Betätigung des Linearstellorgans 1 verhindern und zugleich eine führende Funktion haben.

In dem Gehäuse 2 sind weiterhin zwei Endschalter 19,20 angeordnet. Die Endschalter 19,20 sind auf den Gewindestangen 21,22 mittels der Endschalterhalterung 23,24 verschiebbar angeordnet. Durch Drehen der Gewindestangen 21,22 verschieben sich die Endschalterhalterungen 23,24 auf den Gewindestangen 21,22, so dass sich die Position der Endschalter 19,20 jeweils unabhängig voneinander in der Längsrichtung zur Einstellung des Verfahrweges des Linearstellorgans 1 justieren lässt.

Mittels des Schaltnockens 25, der auf der Aufweitung 18 der Schubstange 11 angeordnet ist, werden die Endschalter 19,20 in beiden Endpositionen der Schubstange 11 betätigt und der Verfahrweg des Linearstellorgans 1 ist somit begrenzt. In einer Motorhalterung 26 ist der Getriebemotor 13 exzentrisch aufgenommen, so dass die Kette 15 durch einfaches Verschwenken bzw. geringfügiges Verdrehen des Getriebemotors 13 in Ergänzung zu dem Kettenspanner 7 gestrafft werden kann.

Es kann beispielsweise ein Absolutwertdrehgeber vorgesehen sein, mittels dessen die Position der Schubstange 11 in der Längsrichtung von einer nicht dargestellten Steuer- und/oder Regeleinrichtung mit hoher Genauigkeit erfassbar ist. Weiterhin erfolgt mittels der Steuer- und/oder Regeleinrichtung vorzugsweise eine stufenlose Drehzahl- und/oder Drehmomentregelung des Getriebemotors 13, beispielsweise nach Maßgabe von vorgegebenen Kennfeldern oder dergleichen. Anstatt der Kette 15 kann in einer alternativen Ausführungsvariante des Linearstellorgans 1 zum Beispiel auch ein Zahnriemen, ein Schubgliederband oder dergleichen zur Kraftübertragung zwischen der Gewindespindel und dem Getriebemotor 13 eingesetzt werden.

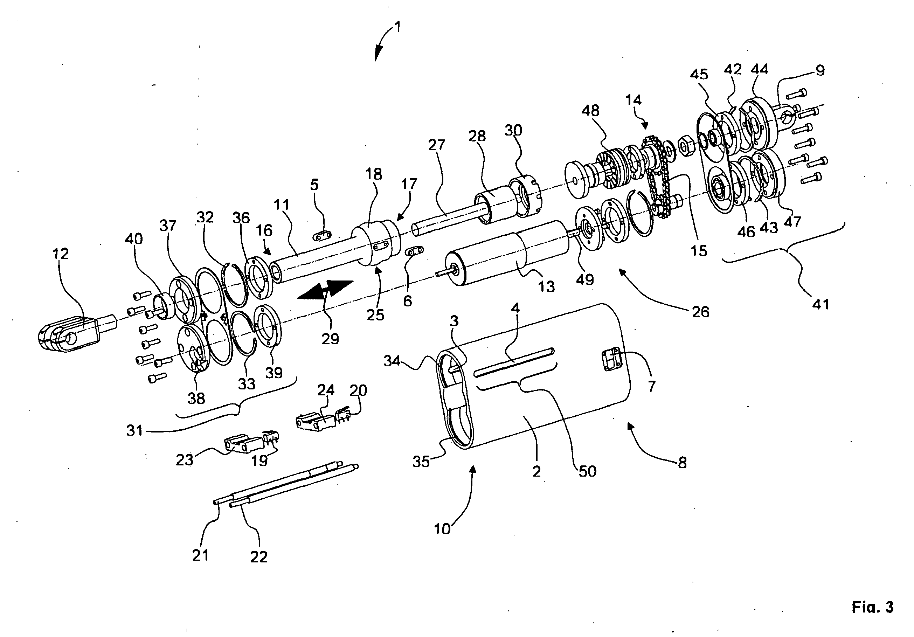

Die **Fig. 3** zeigt eine detaillierte Explosionsdarstellung des inneren Aufbaus des Linearstellorgans 1.

Im unteren Teil der Darstellung ist das Gehäuse 2 des Linearstellorgans 1 mit den Längsführungen 3,4, dem Kettenspanner 7 sowie den Gewindestangen 21,22 mit den Endschalterhalterungen 23,24 sowie den Endschaltern 19,20 dargestellt. Mittels des Kettenspanners 7 ist die Kette 15 zusätzlich zu der Spannmöglichkeit mittels einer Verschwenkung des in der Motorhalterung 26 exzentrisch aufgenommenen Getriebemotors 13 spannbar. Durch den Schaltnocken 25 werden die Endschalter 19,20 in den jeweiligen voreingestellten Endpositionen von der Schubstange 11 überlaufen und somit der Verfahrweg der Schubstange 11 definiert begrenzt.

Eine Gewindespindel 27 wird mittels des Getriebemotors 13 sowie des Kettentriebs 14 gedreht. Hierdurch bewegt sich eine Gewindemutter 28 parallel zur x- Achse 29. Die hohl ausgebildete Schubstange 11 ist konzentrisch um die Gewindespindel 27 herum angeordnet. Um ein geringes mechanisches Spiel und damit eine hohe Positionier- und Wiederholungsgenauigkeit des Linearstellorgans 1 zu erreichen, ist die Gewindemutter 28 in Verbindung mit der Gewindespindel 27 als ein so genannter "Gewinderollenschraubtrieb" ausgeführt. Hierbei wird durch zwei, geringfügig gegeneinander verspannte Schraubenmuttern und darin aufgenommene Gewinderollen eine sehr exakte, nahezu spielfreie Positionierbarkeit der Gewindemutter 28 in Relation zu der Gewindespindel 27 erreicht, so dass das Linearstellorgan 1 eine Bewegung der Schubstange 11 parallel zur x-Achse 29 mit einer hohen mechanischen Präzision erlaubt. Die koaxiale Anordnung der Gewindespindel 27 in der Schubstange 11 ermöglicht darüber hinaus eine wirkungsvolle, im Wesentlichen zentrische Kraftübertragung zwischen der auf der Gewindespindel 27 aufgenommenen Gewindemutter 28 und der Schubstange 11. Ferner erlaubt die koaxiale Anordnung eine sehr kompakte Bauweise der gesamten Anordnung des Linearstellorgans 1.

Die Gewindemutter 28 ist in der Aufweitung 18 der Schubstange 11 aufgenommen und mittels einer Gewindekappe 30 darin fixiert. Die beiden Passfedern 5,6 verhindern eine Verdrehung der Schubstange 11 um die x-Achse 29 infolge der Rotation der Gewindespindel 27 und tragen gleichzeitig zu einer Führung der Schubstange 11 bei.

Im Bereich der Vorderseite 10 des Gehäuses 2 des Linearstellorgans 1 befindet sich eine vordere Lagerung 31 zur Führung bzw. zur Lagerung des Getriebemotors 13 sowie der Schubstange 11 mit dem Gabelkopf 12. Die vordere Lagerung 31 ist im Wesentlichen mit Sprengringen 32,33 gebildet, die in entsprechende Nuten 34,35 im Bereich von zwei übereinander angeordneten Öffnungen in der Vorderseite 10 des Gehäuses 2 formschlüssig einsetzbar sind. Durch die verschraubbaren Flansche 36 bis 39 erfolgt dann die Anbindung an die in das Gehäuse 2 eingesetzten Sprengringe 32,33. Die axiale Führung der Schubstange 11 erfolgt mittels eines Lagers 40, beispielsweise eines Linearkugellagers oder eines anderen Linearlagers.

Eine hintere Lagerung 41 im Bereich der Hinterseite 8 des Gehäuses 2 des Linearstellorgans 1 ist analog zur vorderen Lagerung 31 aufgebaut. Die Sprengringe 42,43 werden wiederum in entsprechende, nicht dargestellte umlaufende Nuten im Bereich von zwei Öffnungen an der Hinterseite 8 des Gehäuses 2 formschlüssig eingesetzt. Mittels der verschraubbaren Flansche 44 bis 47 erfolgt dann die mechanische Anbindung an die Sprengringe 42,43 und damit an das Gehäuse 2.

Weiterhin sind im Bereich der vorderen und der hinteren Lagerung 31,41 zur Abdichtung des Gehäuses 2 jeweils nicht näher bezeichnete Flachdichtungen angeordnet. Die axialen Kräfte in Richtung der x-Achse 29 werden im Wesentlichen durch ein im Bereich der hinteren Lagerung 41 positioniertes Axialrollenlager 48 als Drucklager aufgenommen.

Eine Getriebemotorachse 49 verläuft im Wesentlichen antiparallel zu der Gewindespindel 27, so dass das Linearstellorgan 11 insgesamt eine sehr kompakte Bauform, mit einer insbesondere kurzen Baulänge, aufweist. Der Begriff "antiparallel" meint in diesem Zusammenhang, dass der vom Getriebemotor 13 ausgehende Kraftfluss in eine entgegengesetzte, antiparallele Richtung umgelenkt wird. Gleichwohl sind die Getriebemotorachse 49 und die Gewindespindel 27 im geometrischen Sinn parallel zueinander angeordnet. Im Ergebnis wird der vom Getriebemotor 13 ausgehende Kraftfluss unter einem Winkel von 180° auf die Gewindespindel 27 übertragen.

Hierbei weist ein im Getriebemotor 13 integriertes Getriebe zum Beispiel eine Untersetzung von 1:10 auf, der Kettentrieb 14 erbringt nochmals eine Untersetzung von beispielsweise 1:2 und zwischen der Gewindespindel 27 und der Gewindemutter 28 ergibt sich zum Beispiel eine Untersetzung von 1:5, woraus insgesamt eine mechanische Gesamtuntersetzung von 1:100 folgt. Aufgrund der starken Untersetzung ist eine hohe Kraftentfaltung mit dem erfindungsgemäßen Linearstellorgan 1 möglich. Hierbei ergibt sich aufgrund der Verwendung eines Gewindespindelantriebs, gebildet mit der Gewindespindel 27 und der Gewindemutter 28, zugleich eine extrem hohe Stellgenauigkeit, das heißt insbesondere eine hohe Positionier- und Wiederholgenauigkeit der Linearbewegung der Schubstange 11 parallel zu der x-Achse 29. Zudem ist das Linearstellorgan 1 bei einem Ausfall des Getriebemotors 13 selbsthemmend, so dass in diesem Fall auf die Schubstange 11 einwirkende Kräfte keine undefinierte Verstellung bewirken können.

Mittels des erfindungsgemäßen Linearstellorgans 1 lässt sich eine absolute Positioniergenauigkeit der Schubstange 11 parallel zur x-Achse 29 von weniger als 0,01 mm bei einem Verfahrweg von 50 mm bis zu 100 mm erreichen. Hierbei sind mechanische Stellkräfte von bis zu 10.000 Newton realisierbar. Bei einer entsprechenden Auslegung der Gewindespindel 27 und der Gewindemutter 28 sind Verfahrgeschwindigkeiten von 1 cm bis zu 10 cm pro Minute erreichbar. Die genannten Kennwerte bleiben bis zu einer Gesamtzahl von ca. einer Million Verfahrvorgängen über den gesamten Verfahrweg hinweg sicher reproduzierbar, so dass das erfindungsgemäße Linearstellorgan 1 insbesondere als Stellglied für fernsteuerbare Komponenten von Windkanalmodellen oder dergleichen geeignet ist.

### Bezugszeichenliste

- 1: Linearstellorgan
- 2: Gehäuse
- 3: Längsführung
- 4: Längsführung
- 5: Passfeder
- 6: Passfeder
- 7: Kettenspanner
- 8: Hinterseite
- 9: Halterung (Gehäuse Linearstellorgan)
- 10: Vorderseite
- 11: Schubstange
- 12: Gabelkopf
- 13: Getriebemotor
- 14: Kettentrieb
- 15: Kette
- 16: Anfangsbereich (Schubstange)
- 17: Endbereich (Schubstange)
- 18: Aufweitung
- 19: Endschalter
- 20: Endschalter
- 21: Gewindestange
- 22: Gewindestange
- 23: Endschalterhalterung
- 24: Endschalterhalterung
- 25: Schaltnocken
- 26: Motorhalterung (Getriebemotor)
- 27: Gewindespindel
- 28: Gewindemutter
- 29: x-Achse
- 30: Gewindekappe
- 31: vordere Lagerung
- 32: Sprengring
- 33: Sprengring
- 34: Nut
- 35: Nut
- 36: Flansch
- 37: Flansch
- 38: Flansch
- 39: Flansch
- 40: Lager
- 41: hintere Lagerung
- 42: Sprengring
- 43: Sprengring
- 44: Flansch
- 45: Flansch
- 46: Flansch
- 47: Flansch
- 48: Axialrollenlager
- 49: Getriebemotorachse
- 50: Verfahrweg

## Patentansprüche

1. Linearstellorgan (1), insbesondere zur Fernbetätigung von verstellbaren Komponenten an Windkanalmodellen, mit einem Gehäuse (2) und einem Getriebemotor (13) zum Antrieb einer Gewindespindel (27), wobei auf der Gewindespindel (27) eine Gewindemutter (28) zur Bewegung einer Schubstange (11) angeordnet ist, die Gewindespindel (27) mit dem Getriebemotor (13) über einen Kettentrieb (14) verbunden ist, wobei die Gewindespindel (27) und eine Getriebemotorachse (49) im Wesentlichen antiparallel angeordnet sind, **dadurch gekennzeichnet, dass** der Getriebemotor (13) zur Spannung einer Kette (15) des Kettentriebs (14) exzentrisch aufgenommen ist.

2. Linearstellorgan (1) nach Anspruch 1, **dadurch gekennzeichnet, dass** die Kette (15) des Kettentriebs (14) mittels mindestens eines Kettenspanners (7) spannbar ist.

3. Linearstellorgan (1) nach einem der Ansprüche 1 oder 2, **dadurch gekennzeichnet, dass** zwei Endschalter (19,20) zur Begrenzung eines Verfahrweges (50) der Schubstange (11) vorhanden sind, wobei die Endschalter (19,20) mittels eines im Bereich der Schubstange (11) angeordneten Schaltnockens (25) betätigbar sind.

4. Linearstellorgan (1) nach einem der Ansprüche 1 bis 3, **dadurch gekennzeichnet, dass** jeder Endschalter (19,20) auf jeweils einer Gewindestange (21,22) durch Verdrehen der Gewindestange (21,22) stufenlos verschiebbar angeordnet ist, um den Verfahrweg (50) einzustellen.

5. Linearstellorgan (1) nach einem der Ansprüche 1 bis 4, **dadurch gekennzeichnet, dass** das Gehäuse (2) mindestens eine Längsführung (3,4) aufweist, in der wenigstens eine an der Schubstange (11) angeordnete Passfeder (5,6) verschiebbar aufgenommen ist.

6. Linearstellorgan (1) nach einem der Ansprüche 1 bis 5, **dadurch gekennzeichnet, dass** die Gewindespindel (27) koaxial in der Schubstange (11) aufgenommen ist.

7. Linearstellorgan (1) nach einem der Ansprüche 1 bis 6, **dadurch gekennzeichnet, dass** das Gehäuse (2) eine vordere Lagerung (31) und eine hintere Lagerung (41) aufweist.

8. Linearstellorgan (1) nach einem der Ansprüche 1 bis 7, **dadurch gekennzeichnet, dass** die Schubstange (11) und die Gewindespindel (27) im Bereich der vorderen Lagerung (31) in einem Lager (40), insbesondere einem Linearlager, aufgenommen sind.

9. Linearstellorgan (1) nach einem der Ansprüche 1 bis 8, **dadurch gekennzeichnet, dass** der Getriebemotor (13) mittels einer Steuer- und/oder Regeleinrichtung kontrollierbar ist.

## Claims

1. A linear actuating element (1), in particular for the remote control of adjustable components on wind tunnel models, comprising:
a housing (2), and
a gear motor (13) for driving a threaded spindle (27),
wherein on the threaded spindle (27) a threaded nut (28) for moving a pusher rod (11) is arranged,
wherein the threaded spindle (27) is connected to the gear motor (13) by way of a chain drive (14), wherein the threaded spindle (27) and a gear motor axle (49) are arranged so as to be substantially anti-parallel,
**characterized in that** the gear motor is eccentrically accommodated for tensioning a chain of the chain drive.

2. The linear actuating element of claim 1, **characterized in that** the chain (15) of the chain drive (14) can be tensioned by at least one chain tensioner (7).

3. The linear actuating element of claim 1 or 2, **characterized in that** there are two limit switches (19, 20) for limiting a travel (50) path of the pusher rod (11), wherein the limit switches (19, 20) can be actuated by a control cam (25) arranged in the region of the pusher rod (11).

4. The linear actuating element of one of claims 1 to 3, **characterized in that** each limit switch (19, 20) is arranged on a threaded rod (21, 22), so as to be infinitely slidable by rotation of the threaded rod (21, 22) in order to adjust the travel (50).path.

5. The linear actuating element (1) of one of claims 1 to 4, **characterized in that** the housing (2) comprises at least one longitudinal guide (3, 4) in which at least one feather key (5, 6) that is arranged on the pusher rod (11) is slidably accommodated.

6. The linear actuating element (1) of one of claims 1 to 5, **characterized in that** the threaded spindle (27) is accommodated coaxially in the pusher rod (11).

7. The linear actuating element (1) of claims 1 to 6, **characterized in that** the housing (2) comprises a front bearing arrangement (31) and a rear bearing arrangement (41).

8. The linear actuating element (1) of one of claims 1 to 7, **characterized in that** the pusher rod (11) and the threaded spindle (27) in the region of the front bearing arrangement (31) are accommodated in a bearing (40), in particular in a linear bearing.

9. The linear actuating element (1) of one of claims 1 to 8, **characterized in that** the gear motor (13) can be controlled by at least one of a control device and regulating device.

## Revendications

1. Actionneur linéaire (1), en particulier pour la télécommande de composants ajustables sur des modèles de soufflerie, comprenant un carter (2) et un moto-réducteur (13) pour l'entraînement d'une broche filetée (27), un écrou taraudé (28) étant disposé sur la broche filetée (27) pour le déplacement d'une tige de poussée (11), la broche filetée (27) étant raccordée au moto-réducteur (13) par l'intermédiaire d'une transmission par chaîne (14), la broche filetée (27) et un axe (49) du moto-réducteur étant disposés de façon essentiellement antiparallèle, **caractérisé en ce que** le moto-réducteur (13) est logé excentriquement pour la tension d'une chaîne (15) de la transmission par chaîne (14).

2. Actionneur linéaire (1) suivant la revendication 1, **caractérisé en ce que** la chaîne (15) de la transmission par chaîne (14) peut être tendue au moyen d'au moins un tendeur de chaîne (7).

3. Actionneur linéaire (1) suivant l'une des revendications 1 et 2, **caractérisé en ce que** deux interrupteurs de fin de course (19, 20) sont prévus pour délimiter un parcours de déplacement (50) de la tige de poussée (11), les interrupteurs de fin de course (19, 20) étant actionnables au moyen d'une came de contact (25) disposée dans la zone de la tige de poussée (11).

4. Actionneur linéaire (1) suivant l'une des revendications 1 à 3, **caractérisé en ce que** chaque interrupteur de fin de course (19, 20) est monté mobile en continu sur respectivement une tige filetée (21, 22) par rotation de la tige (21, 22), pour régler le parcours de déplacement (50).

5. Actionneur linéaire (1) suivant l'une des revendications 1 à 4, **caractérisé en ce que** le carter (2) présente au moins une glissière longitudinale (3, 4), dans laquelle est logée mobile au moins une clavette (5, 6) disposée sur la tige de poussée (11).

6. Actionneur linéaire (1) suivant l'une des revendications 1 à 5, **caractérisé en ce que** la broche filetée (27) est logée coaxial élément dans la tige de poussée (11).

7. Actionneur linéaire (1) suivant l'une des revendications 1 à 6, **caractérisé en ce que** le carter (2) présente un logement avant (31) et un logement arrière (41).

8. Actionneur linéaire (1) suivant l'une des revendications 1 à 7, **caractérisé en ce que** la tige de poussée (11) et la broche filetée (27) sont logées dans la zone du logement avant (31) dans un palier (40), en particulier un palier linéaire.

9. Actionneur linéaire (1) suivant l'une des revendications 1 à 8, **caractérisé en ce que** le moto-réducteur (13) est contrôlable au moyen d'un dispositif de commande et/ou de réglage.
